# EUROPEAN PATENT SPECIFICATION

(11) **EP 4 117 798 B1**
(45) Date of publication and mention of the grant of the patent: **25.11.2026**
(21) Application number: 21711227.5
(22) Date of filing: 11.03.2021
(51) Int. Cl.: B01D 3/00, B01D 3/02, B01J 19/32, B01D 3/28

(54) **DEVICE AND METHOD FOR DISTILLATION**
VORRICHTUNG UND VERFAHREN ZUR DESTILLATION
DISPOSITIF ET PROCÉDÉ DE DISTILLATION

(30) Priority: 13.03.2020 NL 2025120
(43) Date of publication of application: 18.01.2023
(73) Proprietor: Revsep B.V., 4551 VB Sas van Gent (NL)
(72) Inventor: GOMMERS, Johan, Joseph, Marie, 4551 VB Sas van Gent (NL)
(74) Representative: Patentwerk B.V.
(86) International application number: PCT/EP2021/056274
(87) International publication number: WO 2021/180900

(56) References cited:
- EP-A1- 0 965 373
- DE-A1- 4 431 546
- US-A- 4 843 828
- US-A- 5 964 986
- US-A1- 2007 193 852
- US-A1- 2018 179 480
- US-B2- 8 323 457

## Description

The invention relates to a device for distillation of mixtures. The invention also relates to the use of a device according to the present invention. The invention further relates to a method for distillation of mixtures.

Despite the wide variety of known separation techniques available, distillation is nowadays still the most widely used. The proven technology of distillation has for example as a benefit that high purity products can be obtained and that it is capital wise relatively cheap. A drawback of distillation is that it is relatively energy consuming, in particular in case of binary mixtures having close boiling points. In addition to this, conventional distillation typically has a relatively low thermodynamic efficiency, which may be in a range of 10 to 20%. Various distillation techniques have been developed over the years in order to attempt a reduction in energy consumption whereof secondary reflux and vaporization distillation (SRV) and the heat integrated distillation column (HIDiC) are examples. However, said technologies have not been applied for industrial application yet. Examples of distillation are disclosed in US2007/193852A1 and US5964986A.

It is a goal of the invention to provide a device for distillation having an improved thermodynamic efficiency and/or wherein the energy consumption of the device is reduced.

The invention provides thereto a device for distillation of (vapor and/or liquid) mixtures as defined in claim 1.

The arrangement of sections of (and/or within) the housing is beneficial as this enables a clever cooperation and/or interplay between the separation section and respectively the reboiling section and the condensing section. Therefore, the separation section can be in fluid connection with both the reboiling section and the condensing section, whilst maintaining a relatively space efficient configuration. The reboiling section, condensing section and separation section are typically positioned within the housing. A further advantage of the present device is that the thermodynamic efficiency and/or thermalefficiency can be significantly improved, up to levels of 80 to 90%. Typically, the thermodynamic and/or thermal efficiency is at least 50 to 60% improved by making use of the device according to the present invention. It is even conceivable that in practice the thermodynamic efficiency will be higher than 90%. This can be at least partially explained by the efficient heat exchange and/or heat transfer by making use of at least one closed fluid circuit which is configured for providing heat exchanging interaction within the reboiling section and within the condensing section. The heat exchanging interaction between the closed fluid circuit and the reboiling section can be described as the closed fluid circuit providing heat to at least part of the liquid fraction of the mixture to be distilled which is present in the reboiling section such that at least part of said liquid fraction vaporizes. This will typically result in a reduction of the temperature of the fluid in the closed fluid circuit. Due to vaporization of at least part of the liquid fraction of the mixture and the fluid connection between the reboiling section and the separation section, at least part of the obtained vapor will rise into the separation section. The heat exchanging interaction between the closed fluid circuit and the condensing section can be described as the closed fluid circuit extracting heat from at least part of the vapor fraction of the mixture to be distilled which is present in the condensing section such that at least part if said vapor will be condensed. This will typically result in an increase of the temperature of the fluid in the closed fluid circuit. Where it is described that in the condensing section at least part of the vapor fraction of the mixture is cooled such that at least part of said vapor fraction is condensed, it can also be said that heat is extracted from at least part of the vapor fraction of the mixture such that at least part of said vapor fraction is condensed. Due to the condensation of at least part of the vapor fraction of the mixture and the fluid connection between the condensing section and the separation section, at least part of the obtained liquid will flow into the separation section. The condensation section thereto basically forms an internal reflux flow. As a consequence, and due to the separation section being configured for providing vapor/liquid (gas/liquid) contact, the vaporized liquid from the reboiling section can come into (direct) contact with the condensed vapor from the condensing section resulting in contribution to obtaining the desired separation of the mixture. The light key, or distillate, is thus typically separated via cross flow operation of vapor and liquid fractions in the separation section. Further, the effective vapor/liquid contact in at least part of the separation section in both vertical and horizontal direction may also contribute to the thermodynamic efficiency. The device according to the present invention enables operation at a relatively low liquid load. Typically, there is vapor/liquid contact within the separation section in the x-, y- and z-direction. The device according to the present invention typically has a longitudinal configuration, resulting in a relatively small width (in the z-direction) of a typical device according to the present invention.

As described above, the closed fluid circuit is configured for providing heat exchanging interaction with at least a fraction of the mixture to be distilled within the reboiling section and within the condensing section. In particular, the fluid of the closed fluid circuit is configured for heat exchanging interaction with at least a fraction of the mixture to be distilled within the reboiling section and within the condensing section. Due to the heat exchanging interaction between the fluid of the closed fluid circuit the temperature of the fluid within the closed fluid circuit typically differs per specific location of the device. The closed fluid circuit in fact enables a reversible energy cycle. Typically, there is a circular fluid flow in the closed fluid circuit. The fluid of the closed fluid circuit preferably circulates continuously. Basically, the closed fluid circuit acts as a circular fluid flow channel. The use of the closed fluid circuit is also beneficial from energic point of view but also from economic point of view as significantly lower costs for heating and cooling compared to conventional distillation systems can be applied. This can also at least partially be explained due to the fact that the use of an external reflux can be omitted for the device according to the present invention. However, it is possible that the device according to the present invention comprises at least one external reflux and/or at least one bypass. There is generally no direct contact between the fluid of the closed fluid circuit and the mixture to be distilled. The device according to the present invention can typically be operated as a balance system.

The device typically comprises at least one vapor outlet and/or at least one liquid outlet. The vapor outlet is typically present at or near the condensing section. It is for example possible that the liquid outlet is positioned at a position substantially before at least part of the vapor fraction is internally condensed. Preferably, at least one vapor outlet is present at an outer end of the housing. At least one liquid outlet is typically present at the reboiling section. Possibly, the device comprises a plurality of liquid outlets. The separation of the heavy key takes typically place in the reboiling section by evaporation in discrete stages. The vapor outlet can for example also be referred to as top outlet and/or the liquid outlet can be referred to as bottom outlet. Where the term vapor is used, also the term gas could be used and vice versa.

The feed mixture can for example be a liquid mixture and/or a gas mixture. The (feed) mixture may also comprises a vapor fraction and/or a liquid fraction. The mixture is typically a binary mixture. However, the mixture can also be a multicomponent mixture. The housing can also be referred to as a framework. The device according to the present invention is typically configured for industrial operation. The mixture is preferably entered (or introduced) in the reboiling section. The mixture may for example be entered at bubbling point. A benzene/toluene mixture is a non-limiting example of a possible mixture which could be separated by making use of a device according to the present invention. It is conceivable that the mixture is supplied to the distillation device via multiple inlets.

The device according to the present invention can for example be operated at total reflux and at regular operation. The device for distillation can also be referred to as distillation column. The reboiling section can also be referred to as reboiler section. The device is typically is operated under atmospheric pressure, or under relatively low pressures. However, the device may also be configured for operation under vacuum and/or under (high) pressure. The latter may for example be interesting when distilling cryogenic fluids.

The device according to the present invention comprises at least one closed fluid circuit. However, it is also conceivable that the device comprises a plurality of closed fluid circuits. The presence of a plurality of closed fluid circuits may be beneficial for the heat exchanging capacity of the closed fluid circuits, and thus for the efficiency of the device as such. It is also conceivable that the closed fluid circuits comprises a plurality of ducts. Such embodiment may also enhance the efficiency of the device. It is for example conceivable that the closed fluid circuits comprises a plurality ducts which are vertically oriented with respect to each other. It is also conceivable that the closed fluid circuit comprises at least one manifold, or possibly multiple manifolds. At least one manifold may be configured to connect a plurality of ducts of the closed fluid circuit which are present in the reboiling section and/or the condensing section to a combined (vertical) connection channel.

The separation section is at least partially enclosed between the reboiling section and the condensing section, and wherein the separation section is in fluid connection with both the reboiling section and the condensing section. It is for example possible that the separation section is connected to the reboiling section via at least one support grid and/or that the separation section is connected to the condensing section via at least one distributor grid. Hence, the support grid and/or distributor grid may at least partially enable and/or enhance the fluid connection between the separation section and respectively the reboiling section and/or the condensing section. In a possible embodiment, the device comprises at least one support grid which is preferably configured for supporting at least part of the packing, if applied, of the separation section. Said support grid is typically substantially positioned between the reboiling section and the separation section. The support grid is typically at least partially permeable to fluids, in particular to vapour. The support grid may provide a protective function for the reboiling section and/or the separation section. The support grid may also provide a protective function for part of the closed fluid circuit. It is also conceivable that the device comprises at least one distributor grid configured for distributing at least part of the liquid fraction present in the condensing section towards the separation section. The distributor grid is in particular configured to distribute at least part of the liquid which is condensed in the condenser section. The distributor grid should preferably also be configured to let vapor pass through. The distributor grid may further provide a protective function for the condensing section, closed fluid circuit and/or the separation section. The distributor grid is typically configured for liquid distribution. The distributor grid may in particular be configured for providing a substantially equal spread of condensed liquid from the condensing section which is to be distributed to the separation section. The distributor grid irrigate the separation section. The distributor grid may comprise multiple grid elements configured for distributing fluid, wherein the spacing of at least some grid elements is preferably below 500 mm, more preferably below 350, even more preferably below 200 mm. A non-limiting preferred embodiment of the distributor grid comprises multiple grid elements having a spacing of substantially 100 mm. If applied, the distributor grid and/or the support grid are positioned within the housing. The distributor grid and/or the support grid preferably extend substantially over the entire length and/or width of the housing. The grid elements are typically oriented in a direction which is substantially perpendicular to the longitudinal direction of the housing, in particular the z-direction. The distributor grid may for example comprise a plurality of substantially parallel positioned grid elements. It is preferred if at least one, and preferably all grid element(s) extend over substantially the entire width of the housing. It is also conceivable that at least one grid element is formed by a baffle.

Preferably, at least part of the separation section is configured such that at least vapor can flow through the separation section in both horizontal and vertical direction. More preferably, at least part of the separation section is configured such that both vapor and liquid can flow (or pass) through the separation section in both horizontal and vertical direction. This embodiment can benefit of a relatively large vapor/liquid contact surface, which is desired for the distillation process. Preferably, the fraction of vapor flowing in horizontal direction is larger than the fraction of vapor flowing in vertical direction.

It is for example conceivable that the separation section comprises a structured packing. A further non-limiting example is a high density structured packing. The structured packing may for example be a lamella-type packing. The desired cross sectional area in order to obtain a desired vapor flow can be defined by the y- and z-direction of the (packing of) the separation section, i.e. the height and width. In particular, there can be a horizontally oriented vapor flow in the condensing section, the separation section and/or the reboiling section. The required cross sectional area is smaller compared with conventional distillation where the cross sectional area is typically defined by the reflux ratio and distillate. However, this is also dependent of the relatively volatility (α) of the mixture which is to be separated. In practice, the required cross sectional area is expected to be larger in case the relatively volatility is higher than 2.5. The desired cross sectional area may also be at least partially dependent of the type of packing applied. The design parameters for distillation according to the present invention provide flexibility in design for, for example, a relatively low pressure drop of vapor flow in the x-direction. A low pressure drop can be favourable for its impact on the hydraulic gradient. Another reason for a low vapor velocity in the x-direction is necessary for efficiency in separation due to the mixing with the vapor flow of the internal reflux. Although pressure drop has an increasing effect on the temperature in the lower area of the device it may contribute positively on the amplification factor. The amplification factor can be described by the temperature differential of the low key (LK) and the heavy key (HK) divided by the (pinching) temperature differential of the heater. Where it is referred to the lower area of the device, it is in particular referred to the area where the temperature is relatively high or at highest. The area may for example be defined by (the lower part of) the condensing section, separation section and/or the reboiling section, wherein the temperature typically increases in longitudinal direction. This may be of relevance for the distillation of mixtures having a close boiling points (for example alpha <1.1) and/or for operating under vacuum conditions. The cross sectional area required for the internal reflux can be defined by the x- and z-direction. Non-limiting examples of packings which could be used for the separation section are a Rombopak packing and/or modified wire mesh. In addition to this, it is also conceivable that a random packing is used.

The housing of the device is in a preferred embodiment substantially horizontally oriented. Advantages of a substantially horizontally oriented housing compared to a vertically oriented distillation column are for example easier construction, operation, and/or maintenance. It is essential that the length of the housing (x-direction) is larger than the height (y-direction) and the width (z-direction) of said housing. In a further preferred embodiment, the length of the housing is at least two times the height of the housing. It is also conceivable that the length of the housing is at least 2.5 times the height of the housing, or preferably the length of the housing is substantially 3 times the height of the housing. However, it is also essential that the housing has a substantially horizontal orientation. Preferably, the housing is substantially longitudinal.

Typically, the length of the housing is at least 20 meter, preferably at least 30 meter, and more preferably at least 40 meter. Further non-limiting examples are the length of the housing being substantially between 10 and 70 meter. The housing may for example be in the range of 50 to 60 meter. The width of the housing is preferably less than 5 meter, preferably less than 4 meter, more preferably less than 3 meter. It is also conceivable that the width of the housing is between 2 and 4 meters. A relatively small width of the housing contributes to the longitudinal character of the device, which may have above mentioned advantages of easier construction, operation and/or maintenance in particular if applied in horizontal orientation.

In a preferred embodiment, the device comprises at least one pump for controlling fluid flow in the closed fluid circuit. Hence, the pump can be configured for pumping the fluid within the closed fluid circuit, preferably in a controlled manner. The pump is preferably configured to provide a circulating fluid flow within the closed fluid circuit. The pump may for example be configured to control the fluid flow in anticlockwise direction. However, it is also conceivable that the fluid is pumped in clockwise direction. The pump may be configured to control the fluid counter currently and/or co-currently with respect to the mixture to be distilled. Typically, the fluid of the closed fluid circuit is controlled such that the fluid flow is in the reboiling section guided substantially a forward direction seen from inlet to at least one vapor outlet. This means that the fluid in the condensing section is guided substantially in a forward direction seen from the vapor outlet towards the inlet. The fluid of the closed fluid circuit flows continuously through the reboiling section and condensing section, wherein the temperature is typically relatively high when it enters the reboiling section and is substantially lowered when the fluid leaves the reboiling section. The opposite applies for the condensing section, where the temperature of the fluid relatively low when it enters the condensing section and wherein said temperature is increased over the length (or distance travelled) of the condensing section.

It is beneficial if at least part of the closed fluid circuit is positioned inside the housing. More preferably, if at least part of the closed fluid circuit is positioned inside the reboiling section and/or at least part of the closed fluid circuit is positioned inside the condenser section. In this manner, the heat exchanging interaction between the fluid of the closed fluid circuit and the the mixture to be distilled can be enabled in a relatively easy manner and/or can be improved. Preferably the closed fluid circuit is positioned such that it does not (negatively) affect the vapor/liquid contact in the separation section. Hence, the closed fluid circuit may be positioned at a predetermined distance from the separation section. It is also possible that the closed fluid circuit is substantially entirely positioned inside the housing. In this way, the housing may provide a protective function for the closed fluid circuit.

In a further beneficial embodiment, the device comprises at least one cooler configured for cooling the closed fluid circuit, in particular the fluid of the closed fluid circuit, preferably wherein the cooler is positioned substantially prior to the condensing section. In this embodiment, the cooler can contribute to obtaining a desired temperature for (fluid of) the closed fluid circuit in order to enable condensation in the condensation section in a more controlled manner. The cooler may be positioned at least partially inside the housing and/or at least partially outside the housing. The cooler is preferably configured to provide cooling of the closed fluid circuit, in particular the fluid thereof to a predetermined temperature. The cooler may for example be configured to provide cooling up to several dozen degrees Celsius. The temperature to be reached may for example be in the range of -200 to 300 degrees Celsius, preferably in the range of-100 to 200 degrees Celsius. However, typically, due to the efficiency of the closed fluid circuit, in practice, the cooler provides a cooling effect for the fluid of the closed fluid circuit of only a few degrees Celsius, for example in the range of 1 to 5 degrees Celsius, preferably in the range of 1 to 3 degrees Celsius. This can be explained by energy recovery of the integrated heating system achieved by the use of a closed fluid circuit. The cooler may be configured to overcome the temperature difference of the fluid based upon pinch analysis. The cooler can be positioned in the region of a pinch point of the closed fluid circuit, in particular before the fluid enters the condensing section.

The device may also comprise at least one heater configured for heating the closed fluid circuit, in particular the fluid of the closed fluid circuit, preferably wherein the heater is positioned substantially prior to the reboiling section. In this embodiment, the heater can contribute to obtaining a desired temperature for (fluid of) the closed fluid circuit in order to enable vaporization in the reboiling section in a more controlled manner. The heater may be positioned at least partially inside the housing and/or at least partially outside the housing. The heater is preferably configured to provide heating of the closed fluid circuit, in particular the fluid thereof to a predetermined temperature. The heater may for example be configured to provide heater up to several dozen degrees Celsius. The temperature to be reached may for example be in the range of -200 to 300 degrees Celsius, preferably in the range of-100 to 200 degrees Celsius. However, typically, due to the (energetic) efficiency of the closed fluid circuit, in practice, the heater provides a heating effect to the fluid of the closed fluid circuit of only a few degrees Celsius, for example in the range of substantially 1 to 5 degrees Celsius, preferably in the range of 1 to 3 degrees Celsius. The heater may be configured to overcome the temperature difference of the fluid based upon pinch analysis. The heater can be positioned in the region of a pinch point of the closed fluid circuit, in particular before the fluid enters the reboiling section. A substantial amplification of the internal reflux can be achieved by pinching temperatures of the heater.

The device may further comprise at least one expansion vessel. In particular, the closed fluid circuit may be connected with at least one expansion vessel. Such expansion vessel is typically configured to protect the closed fluid circuit from excessive pressure. The expansion vessel can be any known, suitable expansion vessel. Typically, if applied, the expansion vessel is positioned in a region of the closed fluid circuit wherein the temperature is relatively low.

Abovementioned optional heater and cooler are in particular configured for obtaining a desired temperature in or for the closed fluid circuit. The heater and cooling can be any conventional heater or cooling useable for industrial application. The fluid in the closed fluid circuit is preferably substantially liquid and/or substantially in vapor phase. Non-limiting examples of fluids to be used in the closed fluid circuit are water, hydrogen and/or helium.

It is also possible that the device comprises at least one secondary heater configured for heating at least part of the liquid fraction in the reboiling section. More in particular, at least one secondary heater may be configured for the provision of distillate. At least one secondary heater is preferably positioned between at least one inlet and at least one liquid outlet. If applied, at least one secondary heater is typically positioned within the liquid phase of the mixture present in the reboiling section. Said secondary heater is typically configured to enhance the vaporization of liquid fraction in the reboiling section. At least one secondary heater may for example be a heat exchanger.

It is further possible that the device comprises at least one secondary heat exchanger, for example a secondary cooler, configured for cooling at least part of the vapor fraction in the condensing section. The presence of at least one of said secondary heat exchanger may for example be beneficial in case the mixture to be distilled is a vapor mixture. If applied, at least one secondary heat exchanger is typically positioned within the vapor phase of the mixture present in the condensing section and configured to enhance the condensation of the vapor fraction in the condensing section. The secondary heat exchanger may also be position in the condensing section between an inlet for feeding a vapor mixture to be distilled to the device and the vapor outlet. It is also conceivable that the device according to the present invention comprises both at least one secondary heat exchanger present in the reboiling section, and at least one secondary heat exchanger present in the condensing section.

The reboiling section and/or the condensing section may be provided with at least one baffle and preferably a plurality baffles. The presence of at least one baffle in the reboiling section may prevent back mixing of at least part of the liquid fraction in the reboiling section. Back mixing is undesirable as this may negatively affect the distillation process. Further, the presence of at least one baffle in the reboiling section may also enable obtaining of discrete separation stages. At least one baffle in the condensing section may prevent condensed liquid affected the output of the device near the vapor outlet. It is conceivable that at least one baffle is connected to the distributor grid, if applied. At least one baffle may also form integral part of the distributor grid. It is also conceivable that at least one baffle is connected to the support grid, if applied. At least one baffle may also form integral part of the support grid. It is also conceivable that at least one baffle is present in the vapor disengaging space of the reboiling section, in particular located between the support grid and an upper part of the closed fluid circuit, to enable discrete separation stages. If multiple baffles are applied, either in the reboiling section and/or the condensing section, adjacent baffles are typically positioned at a spacing in the range of 100 and 500 mm. The spacing is preferably below 400m, more preferably below 300 mm and even more preferably below 200 mm.

It is also conceivable that at least part of the housing and/or at least part of the reboiling section is positioned under a predetermined angle. The housing and/or the reboiling section may for example be slightly tilted, in particular with respect to the substantially horizontal ground surface. The predetermined angle may for example be between 0.01% and 10%, preferably between 0.01% and 0.1%. An embodiment having at least part of the housing and/or at least part of the reboiling section is positioned under a predetermined angle may contribute to more controlled flow of at least part of the liquid fraction in the reboiling section. It may further be used to at least partially drain the reboiling section and/or for a positive effect on the liquid level in the reboiling section (hydraulic gradient) and/or to enhance liquid collection and redistribution of the liquid in the reboiling section, in particular in the support grid, if applied. A (liquid) level controller may also be present in the reboiling section.

At least part of the liquid fraction in the reboiling section should typically flow from a lower temperature region (i.e. the light key region) to the higher temperature region (i.e. the high key region). Practically, it can also be said that the liquid has to flow from a lower pressure to a higher one. In order to minimise the difference in liquid level is preferred to avoid impact on the efficiency of the reboiling section, an example thereof is back mixing. In general, it is preferred that the device according to the invention operates using relatively low liquid velocities.

It is conceivable that the device comprises at least one removable dump packing. Preferably such dump packing is positioned substantially inside the housing. It is conceivable that the device comprises at least two removable dump packings, wherein each dump packing is present at a distal end of the device. This is in particular preferred in case the device has a substantially horizontally oriented configuration. The separation section may for example be enclosed by the condensing section, the reboiling section and the at least two dump packings. The presence of at least one dump packing may further contribute to easier maintenance of the device. At least one dump packing is preferably removably poisoned within the housing. In particular in case part of the separation section should be submitted to maintenance, the dump packing may provide easy access for a technician. It is further conceivable that the housing comprises a section configured for fractional condensation and/or a section configured for fractional vaporization. This could for example be achieved by applying a heat exchanger, for example but not limited to a tubular bundle and wire mesh combination. The presence of a section for fractional condensation and/or a section for fractional vaporization may be applied to pinch the temperature in the closed fluid circuit. If applied, the section configured for fractional condensation is positioned in the housing prior to the cooler which is configured for cooling the closed fluid circuit, in particular the fluid of the closed fluid circuit. If applied, the section configured for fractional vaporization is positioned in the housing prior to the heater which is configured for heating the closed fluid circuit, in particular the fluid of the closed fluid circuit.

Possibly, at least part of the closed fluid circuit extends over substantially the entire length of the reboiling section. It is also conceivable that at least part of the closed fluid circuit extends over substantially the entire length of the condensing section. It is further important that the fluid of the closed fluid circuit flows in a single direction in the reboiling section and/or in the condensing section. The fluid of the closed fluid circuit flows in a single direction in the reboiling section and in a single direction in the condensing section, wherein the flow direction in the reboiling section is opposite to the flow direction in the condensing section. It is not allowed that the closed fluid circuit makes a loop within the reboiling section and/or within the condensing section as this would negatively affect the heat exchanging interaction between the closed fluid circuit and at least a fraction of the mixture to be distilled within the reboiling section and/or within the condensing section. It is further conceivable that at least one closed fluid circuit comprises a plurality of mutually connected ducts. Preferably, at least two ducts are positioned substantially parallel. At least two ducts may for example be substantially vertically oriented with regard to each other. At least one closed fluid circuit may also comprises at least one bypass duct which is preferably configured for bypassing at least part of the fluid in the closed fluid circuit. The bypass duct may act as reflux. Preferably, the at least one bypass duct is positioned upstream of the inlet(s). At least one bypass duct is preferably configured for providing an extra cooling effort for the condensing section. It is conceivable that the closed fluid circuit comprises multiple bypass ducts. It is also conceivable that in case the device comprises a plurality of closed fluid circuits, preferably each closed fluid circuit comprises a bypass duct.

In a further preferred embodiment of the device according to the present invention, at least part of the reboiling section is configured for fractional vaporization. The reboiling section may for example be divided in a liquid fraction and a vapor fraction. For such embodiment, typically, the bottom region of the reboiling section will comprise a liquid fraction whereas an upper region of the reboiling section will comprise a vapor fraction. The reboiling section may for example comprises at least one bottom region configured for receiving and/or comprising a liquid fraction and at least one upper region configured for receiving and/or comprising a vapor fraction.

It is a further preferred embodiment conceivable that the reboiling section comprises multiple inlets, which inlets are in particular configured for feeding a mixture to be distilled to the device. The multiple inlets may for example be vertically oriented with respect to another. It is also conceivable that the multiple inlets have an inclined orientation. It is conceivable that at least one inlet is located in the bottom region of the reboiling section in order to feed a mixture to the liquid fraction and/or wherein at least one inlet is located in the upper region of the reboiling section in order to feed a mixture to the vapor fraction. Preferably, the upper region of the reboiling section is provided with multiple inlets. The presence of multiple feed inlets may also positively contribute to the thermodynamic and/or thermal efficiency due to a lower vaporisation rate in the liquid phase of the reboiling section. The presence of multiple inlets further enables to supply mixtures with different feed temperatures. Such preferred embodiment may reduce the required cross sectional area and such embodiment may also positively contribute to the thermodynamic efficiency of the distillation device. It is also conceivable that at least part of the condensing section is configured for fractional condensation. In yet a further embodiment, substantially the entire condensing section may be configured for fractional condensation. The device can be configured to operate in split flow and/or the device may be configured for distilling a mixture in a single vaporization-condensation cycle. However, the device according to the present invention can also be configured to separate the mixture to be distilled by multiple (repeated) vaporization-condensation cycles.

The device according to the present invention may also comprise at least one external condenser configured for condensing of at least part of the vapor fraction which is removed via at least one vapor outlet. The condenser is in particular configured for the provision of distillate. The external condenser could be any known prior art condenser for use in distillation processes. It is possible that at least part of a liquid and/or vapor fraction which comes from the external condenser is returned to the device, in particular to the condensing section of the device, as reflux. As indicated above, a fraction of the distillate flow may be reintroduced into the device as reflux, in particular in the condensing section. It is for example possible that this is a fraction between 1 and 10%, preferably between 2.5 and 7.5%. Hence, the external condenser may configured for the purpose of mass balance control. However, the fraction used for mass balanced control is in practice preferably relatively small, and might for example be used in case of high-purity distillation.

The device according to the present invention may for example be used for batch distillation. It is also possible that the device is used for multistage flash distillation (MSF), for example for the desalination of (sea)water. It is also conceivable that the device is (configured to be) used for multiple effect distillation (MED) for example for the desalination of (sea)water. The device, and in particular the separation section, may be divided in multiple sections wherein each section operates at a different pressure (configured for operating at different temperatures). The sections may be horizontally defined sections.

The invention also relates to a system comprising multiple devices according to the present invention. The devices can for example be configured to be connected and/or operated in series. Such system may for example be configured for desalination of (sea)water.

The invention also relates to the use of a device according to the present invention. The invention further relates to a housing for use in a device according to the present invention. The invention also related to the use of a closed fluid circuit as described for the present invention for use in distillation processes.

The invention also relates to a method for distillation of mixtures, by making use of a device according to any the present invention, wherein heating at least part of the liquid fraction of the mixture to be distilled such that at least part of said liquid fraction vaporizes is realized via heat exchanging interaction between said liquid fraction and at least one closed fluid circuit, and wherein cooling at least part of the vapor fraction of said mixture is cooled such that at least part of said vapor fraction is condensed via heat exchanging interaction between said vapor fractions and said closed fluid circuit. Heating and cooling is in particular provided via heat exchanging interaction between the vapor and liquid fraction and the fluid of the closed fluid circuit. The method according to the present invention experiences similar advantages as described above for the device according to the present invention.

The invention will be further elucidated below on the basis of the non-limitative exemplary embodiments shown in the following figures. Herein shows:
figure 1 a schematic representation of a possible embodiment of a device according to the present invention, and
figure 2 shows a schematic representation of a second possible embodiment of a device according to the present invention.

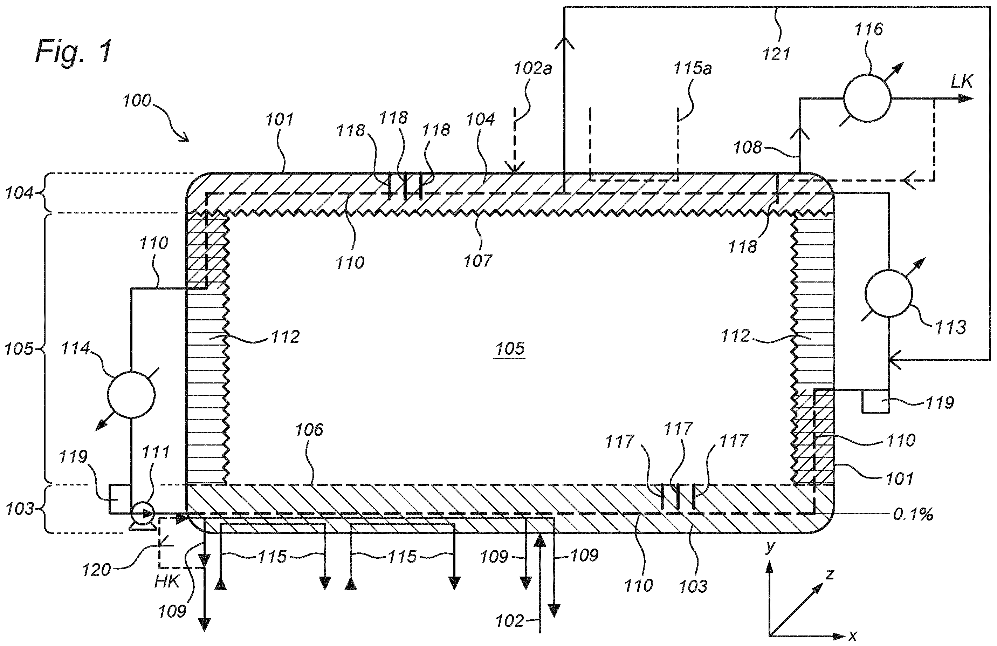

Figure 1 shows a schematic representation of a possible embodiment of a device 100 according to the present invention. The figure shows a side view of the device 100. The device 100 is configured for distillation of mixtures, for example liquid and/or vapor mixtures. In the shown embodiment, the device 100 comprises a inlet 102 for feeding a mixture to be distilled to the device 100 and a housing 101. The position of the inlet 102 is an exemplary position of many possibilities. It is also conceivable that an inlet 102a is present near the condensing section 104. The housing 101 comprises a reboiling section 103, a condensing section 104 and a separation section 105. The reboiling section 103 is present at a lower region of the housing 101. Within the reboiling section 103, heat is providing to at least part of the liquid fraction of the mixture to be distilled such that at least part of said liquid fraction vaporizes. The reboiling section 103 is provided with a plurality of baffles 117. Further, the housing 100, and in particular the reboiling section 103 is in the shown example positioned under a predetermined angle of 0.1%. The condensing section 104 is present at an upper region of the housing 101. Within the condensing section 104, at least part of the vapor fraction of the mixture is cooled such that at least part of said vapor fraction is condensed. The condensing section 105 is also provided with a baffle 118. The separation section 105 which is partially enclosed between the reboiling section 103 and the condensing section 104. The separation section 105 is in fluid connection with both the reboiling section 103 and the condensing section 104. The separation section 105 connects to the reboiling section 103 and condensing section 104 via respectively a support grid 106 and a distributor grid 107. The separation section 105 is configured for providing vapor/liquid contact between at least part of the vapor fraction and part of the liquid fraction of the mixture to be distilled. The device 100 further comprises a vapor outlet 108 and a liquid outlet 109. The liquid outlet 109 is the heavy key outlet 109 and is provided in the reboiling section 103. The vapor outlet 108 is the light key outlet 108 and is provided in the condensing section 104. The device 100 further comprises at least one closed fluid circuit 110 which is configured for providing heat exchanging interaction with at least a fraction of the mixture to be distilled within the reboiling section 103 and within the condensing section 104. In the shown embodiment, the device 100 has a substantially horizontal orientation. In particular, the housing 101 is substantially horizontally oriented. The device 100 comprises a pump 111 for controlling fluid flow in the closed fluid circuit 110. The location of said pump 111 is merely for the purpose of illustration, the positioning of the pump 111 may differ and for example be adapted to the operating parameters. The closed fluid circuit 110 is partially positioned inside the housing 101. Part of the closed fluid circuit 110 is positioned inside the reboiling section 103, part inside the condensing section 104 and parts are positioned inside a so-called removable dump packings 112 which are provided at the distal ends of the housing 101. A cooler 113 is present in order to cool the closed fluid circuit 110, in particular the fluid of the closed fluid circuit 110. It conceivable that the housing 101 comprises a section configured for fractional condensation prior to the cooler 113. A heater 114 is present for heating the closed fluid circuit 110, in particular the fluid of the closed fluid circuit 110. It is conceivable that the housing 101 comprises a section configured for fractional vaporization prior to the heater 114.Secondary heaters 115 are provided for heating at least part of the liquid fraction in the reboiling section 103. Optionally, in particular in case the optional (vapor) inlet 102a is applied, at least secondary cooler 115a can be present in the condensing section. Another optional feature is the presence of a bypass duct 121 which is configured for bypassing at least part of the fluid in the closed fluid circuit 110. An external condenser 116 is present for condensing of at least part of the vapor fraction which is removed via at least one vapor outlet 108. The light key (LK) and heavy key (HK) are indicated as well in the figure. A level controller 120 is present to control the heavy key. The closed fluid circuit 110 is further provided with two, optional, expansion vessels 119.

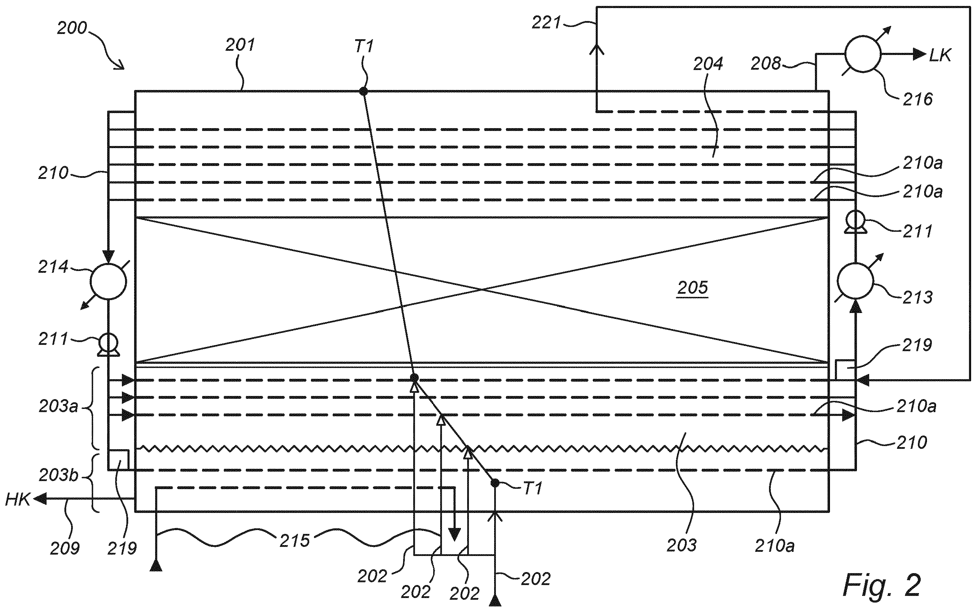

Figure 2 shows a schematic representation of a possible embodiment of a device 200 according to the present invention. The figure shows a side view of the device 200. The device 200 is substantially horizontally oriented. The device 200 is configured for distillation of mixtures, for example liquid and/or vapor mixtures. The device 200 comprises a housing 201 which comprises a reboiling section 203, a condensing section 204 and a separation section 205. In the shown embodiment, the device 200 comprises multiple inlets 202 for feeding a mixture to be distilled to the device 200. The inlets 202 are vertically oriented with respect to another. A first one inlet 202 is located in the bottom region 203b of the reboiling section 203 in order to feed a mixture to the liquid fraction and the further inlets 202 are located in the upper region 203a of the reboiling section 203 in order to feed a mixture to the vapor fraction. A non-limiting example of a temperature curve of the temperature T1 within the device 200 is indicated in the figure. This curve is related to the use of the multiple inlets 202. More in particular, the isotherm shown is equal to the temperature of the feed. The reboiling section 203 as shown is in particular configured for fractional vaporization. The separation section 205 is in fluid connection with both the reboiling section 203 and the condensing section 204. The device 200 further comprises a vapor outlet 208 and a liquid outlet 209. The liquid outlet 209 is the heavy key outlet 209 and is provided in the bottom region 203b of the reboiling section 203. The vapor outlet 208 is the light key outlet 208 and is provided in the condensing section 204. The device 200 further comprises at least one closed fluid circuit 210 which is configured for providing heat exchanging interaction with at least a fraction of the mixture to be distilled within the reboiling section 203 and within the condensing section 204. In the shown embodiment, the closed fluid circuit 210 comprises a plurality of ducts 210a. The ducts 210a are mutually connected. The ducts 210a are vertically oriented with respect to each other and positioned substantially parallel. A manifold may be present to connect a plurality of ducts 210a of the closed fluid circuit which are present in the reboiling section 203 and/or the condensing section 204 to a combined (vertical) connection channel. Part of the closed fluid circuit 210 extends over substantially the entire length of the reboiling section 203 and part of the closed fluid circuit 210 extends over substantially the entire length of the condensing section 204. The fluid of the closed fluid circuit 210 flows in a single direction in the reboiling section 203 and in the condensing section 204, but opposite of another. The closed fluid circuit 210 also comprises a bypass duct 221 which is configured for bypassing at least part of the fluid in the closed fluid circuit 210. The device 200 comprises a pump 211 for controlling fluid flow in the closed fluid circuit 210. The closed fluid circuit 210 is partially positioned inside the housing 201. A cooler 213 is present in order to cool the closed fluid circuit 210, in particular the fluid of the closed fluid circuit 210. A heater 214 is present for heating the closed fluid circuit 210, in particular the fluid of the closed fluid circuit 210. A secondary heater 215 is provided for heating at least part of the liquid fraction in the reboiling section 203. An external condenser 216 is present for condensing of at least part of the vapor fraction which is removed via at least one vapor outlet 208. The light key (LK) and heavy key (HK) are indicated as well in the figure. It is conceivable that the heavy key is positioned at or near the inlet. The closed fluid circuit 210 is further provided with two, optional, expansion vessels 219. The housing 201 and/or the reboiling section 203 may for example be slightly tilted, in particular with respect to the substantially horizontal ground surface.

The verb 'comprise' and its conjugations as used in this patent document are understood to mean not only 'comprise', but to also include the expressions 'contain', 'substantially contain', 'formed by' and conjugations thereof. Terms of relative position, such as "upper" and "lower", or "vertical" and "horizontal" as used in this patent document are, for clarity reasons only, based on a conventional orientation of the device for distillation according to the invention during use, hence, when position upon, built onto or connected with a substantially horizontal surface (or ground).

## Claims

1. Device (100), (200) for distillation of mixtures, comprising:
- at least one inlet (102), (202) for feeding a mixture to be distilled to the device (100), (200),
- at least one housing (101), (201) comprising a:
∘ reboiling section (103), (203) wherein heat is providing to at least part of the liquid fraction of the mixture to be distilled such that at least part of said liquid fraction vaporizes,
∘ at least one condensing section (104), (204) wherein at least part of the vapor fraction of the mixture is cooled such that at least part of said vapor fraction is condensed, and
∘ at least one separation section (105), (205) which is at least partially enclosed between the reboiling section (103), (203) and the condensing section (104), (204), and wherein the separation section (105), (205) is in fluid connection with both the reboiling section (103), (203) and the condensing section (104), (204), wherein the separation section (105), (205) is configured for providing vapor/liquid contact between at least part of the vapor fraction and part of the liquid fraction of the mixture to be distilled,
- at least one vapor outlet (108), (208) and/or at least one liquid outlet (109), (209),
and
- at least one closed fluid circuit (110), (210) which is configured for providing heat exchanging interaction with at least a fraction of the mixture to be distilled within the reboiling section (103), (203) and within the condensing section (104), (204), and wherein the closed fluid circuit (110), (210) is configured such that the fluid of the closed fluid circuit (110), (210) flows in a single direction in the reboiling section (103), (203) and/or in the condensing section (104), (204), wherein the flow direction in the reboiling section (103), (203) is opposite to the flow direction in the condensing section (104), (204),
wherein the length of the housing (101), (201) is larger than the height and the width of said housing (101), (201), wherein the housing is substantially horizontally oriented.

2. Device (100), (200) according to claim 1, wherein the reboiling section (103), (203) comprises at least one bottom region (103b), (203b) configured for receiving and/or comprising a liquid fraction and at least one upper region (103a), (203a) configured for receiving and/or comprising a vapor fraction.

3. Device (200) according to claim 1 or claim 2, comprising multiple inlets (202) wherein each inlet (202) is configured for feeding a mixture to be distilled to the device (200), preferably wherein at least one inlet (202) is located in the bottom region (203b) of the reboiling section (203) in order to feed a mixture to the liquid fraction and/or wherein at least one inlet (202) is located in the upper region (203a) of the reboiling section (203) in order to feed a mixture to the vapor fraction.

4. Device (100), (200) according to any of the previous claims, wherein the device (100), (200) has a longitudinal configuration.

5. Device (100), (200) according to any of the previous claims, wherein the length of the housing (101), (201) is at least two times the height of the housing (101), (201).

6. Device (100), (200) according to any of the previous claims, comprising at least one pump (111), (211) for controlling fluid flow in at least one closed fluid circuit (110), (210).

7. Device (100), (200) according to any of the previous claims, wherein at least part of the closed fluid circuit (110), (210) is positioned inside the housing (101), (201) and/or wherein at least part of the closed fluid circuit (110), (210) extends over the entire length of the reboiling section (103), (203) and/or wherein at least part of the closed fluid circuit (110), (210) extends over the entire length of the condensing section (104), (204).

8. Device (200) according to any of the previous claims, wherein at least one closed fluid circuit (210) comprises a plurality of mutually connected ducts (210a), preferably wherein at least two ducts (210a) are positioned substantially parallel.

9. Device (100), (200) according to any of the previous claims, wherein at least one closed fluid circuit (110), (210) comprises at least one bypass duct (121), (221) configured for bypassing at least part of the fluid in the closed fluid circuit (110), (210).

10. Device (100), (200) according to any of the previous claims, comprising at least one cooler (113), (213) configured for cooling the closed fluid circuit (110), (210), in particular the fluid of the closed fluid circuit (110), (210) and/or at least one heater (114), (214) configured for heating the closed fluid circuit (110), (210), in particular the fluid of the closed fluid circuit (110), (210).

11. Device (100), (200) according to any of the previous claims, comprising at least one secondary heater (115), (215) configured for heating at least part of the liquid fraction in the reboiling section (103), (203).

12. Device (100), (200) according to any of the previous claims, comprising at least one external condenser (116), (216) configured for condensing of at least part of the vapor fraction which is removed via at least one vapor outlet (108), (208).

13. Method for distillation of mixtures, by making use of a device (100), (200) according to any of claims 1-12, wherein heating at least part of the liquid fraction of the mixture to be distilled such that at least part of said liquid fraction vaporizes is realized via heat exchanging interaction between said liquid fraction and at least one closed fluid circuit (110), (210), and wherein cooling at least part of the vapor fraction of said mixture is cooled such that at least part of said vapor fraction is condensed via heat exchanging interaction between said vapor fractions and said closed fluid circuit (110), (210).

## Patentansprüche

1. Vorrichtung (100), (200) zur Destillation von Gemischen, umfassend:
- mindestens einen Einlass (102), (202) zum Zuführen eines zu destillierenden Gemisches zu der Vorrichtung (100), (200),
- mindestens ein Gehäuse (101), (201), umfassend:
∘ einen Aufkochabschnitt (103), (203), in dem mindestens einem Teil der Flüssigfraktion des zu destillierenden Gemisches derart Wärme zugeführt wird, dass mindestens ein Teil der genannten Flüssigfraktion verdampft,
∘ mindestens einen Kondensationsabschnitt (104), (204), in dem mindestens ein Teil der Dampffraktion des Gemisches derart gekühlt wird, dass mindestens ein Teil der genannten Dampffraktion kondensiert wird, und
∘ mindestens einen Trennabschnitt (105), (205), der zumindest teilweise zwischen dem Aufkochabschnitt (103), (203) und dem Kondensationsabschnitt (104), (204) eingeschlossen ist, und wobei der Trennabschnitt (105), (205) sowohl mit dem Aufkochabschnitt (103), (203) als auch mit dem Kondensationsabschnitt (104), (204) in Fluidverbindung steht, wobei der Trennabschnitt (105), (205) zum Bereitstellen eines Dampf/Flüssigkeit-Kontakts zwischen mindestens einem Teil der Dampffraktion und einem Teil der Flüssigfraktion des zu destillierenden Gemisches ausgebildet ist,
- mindestens einen Dampfauslass (108), (208) und/oder mindestens einen Flüssigkeitsauslass (109), (209),
und
- mindestens einen geschlossenen Fluidkreislauf (110), (210), der zum Bereitstellen einer wärmeaustauschenden Wechselwirkung mit mindestens einer Fraktion des zu destillierenden Gemisches innerhalb des Aufkochabschnitts (103), (203) und innerhalb des Kondensationsabschnitts (104), (204) ausgebildet ist, und wobei der geschlossene Fluidkreislauf (110), (210) so ausgebildet ist, dass das Fluid des geschlossenen Fluidkreislaufs (110), (210) in dem Aufkochabschnitt (103), (203) und/oder in dem Kondensationsabschnitt (104), (204) in einer einzigen Richtung strömt, wobei die Strömungsrichtung in dem Aufkochabschnitt (103), (203) der Strömungsrichtung in dem Kondensationsabschnitt (104), (204) entgegengesetzt ist, wobei die Länge des Gehäuses (101), (201) größer ist als die Höhe und die Breite des genannten Gehäuses (101), (201), wobei das Gehäuse im Wesentlichen horizontal ausgerichtet ist.

2. Vorrichtung (100), (200) nach Anspruch 1, wobei der Aufkochabschnitt (103), (203) mindestens einen Bodenbereich (103b), (203b), der zum Aufnehmen und/oder Enthalten einer Flüssigfraktion ausgebildet ist, und mindestens einen oberen Bereich (103a), (203a), der zum Aufnehmen und/oder Enthalten einer Dampffraktion ausgebildet ist, umfasst.

3. Vorrichtung (200) nach Anspruch 1 oder Anspruch 2, umfassend mehrere Einlässe (202), wobei jeder Einlass (202) zum Zuführen eines zu destillierenden Gemisches zu der Vorrichtung (200) ausgebildet ist, vorzugsweise wobei mindestens ein Einlass (202) in dem Bodenbereich (203b) des Aufkochabschnitts (203) angeordnet ist, um der Flüssigfraktion ein Gemisch zuzuführen, und/oder wobei mindestens ein Einlass (202) in dem oberen Bereich (203a) des Aufkochabschnitts (203) angeordnet ist, um der Dampffraktion ein Gemisch zuzuführen.

4. Vorrichtung (100), (200) nach einem der vorhergehenden Ansprüche, wobei die Vorrichtung (100), (200) eine Längskonfiguration aufweist.

5. Vorrichtung (100), (200) nach einem der vorhergehenden Ansprüche, wobei die Länge des Gehäuses (101), (201) mindestens das Zweifache der Höhe des Gehäuses (101), (201) beträgt.

6. Vorrichtung (100), (200) nach einem der vorhergehenden Ansprüche, umfassend mindestens eine Pumpe (111), (211) zum Steuern des Fluidstroms in mindestens einem geschlossenen Fluidkreislauf (110), (210).

7. Vorrichtung (100), (200) nach einem der vorhergehenden Ansprüche, wobei mindestens ein Teil des geschlossenen Fluidkreislaufs (110), (210) innerhalb des Gehäuses (101), (201) positioniert ist und/oder wobei sich mindestens ein Teil des geschlossenen Fluidkreislaufs (110), (210) über die gesamte Länge des Aufkochabschnitts (103), (203) erstreckt und/oder wobei sich mindestens ein Teil des geschlossenen Fluidkreislaufs (110), (210) über die gesamte Länge des Kondensationsabschnitts (104), (204) erstreckt.

8. Vorrichtung (200) nach einem der vorhergehenden Ansprüche, wobei mindestens ein geschlossener Fluidkreislauf (210) eine Mehrzahl miteinander verbundener Leitungen (210a) umfasst, vorzugsweise wobei mindestens zwei Leitungen (210a) im Wesentlichen parallel positioniert sind.

9. Vorrichtung (100), (200) nach einem der vorhergehenden Ansprüche, wobei mindestens ein geschlossener Fluidkreislauf (110), (210) mindestens eine Bypassleitung (121), (221) umfasst, die zum Umleiten mindestens eines Teils des Fluids in dem geschlossenen Fluidkreislauf (110), (210) ausgebildet ist.

10. Vorrichtung (100), (200) nach einem der vorhergehenden Ansprüche, umfassend mindestens einen Kühler (113), (213), der zum Kühlen des geschlossenen Fluidkreislaufs (110), (210), insbesondere des Fluids des geschlossenen Fluidkreislaufs (110), (210), ausgebildet ist, und/oder mindestens eine Heizeinrichtung (114), (214), die zum Erwärmen des geschlossenen Fluidkreislaufs (110), (210), insbesondere des Fluids des geschlossenen Fluidkreislaufs (110), (210), ausgebildet ist.

11. Vorrichtung (100), (200) nach einem der vorhergehenden Ansprüche, umfassend mindestens eine Sekundärheizeinrichtung (115), (215), die zum Erwärmen mindestens eines Teils der Flüssigfraktion in dem Aufkochabschnitt (103), (203) ausgebildet ist.

12. Vorrichtung (100), (200) nach einem der vorhergehenden Ansprüche, umfassend mindestens einen externen Kondensator (116), (216), der zum Kondensieren mindestens eines Teils der Dampffraktion ausgebildet ist, die über mindestens einen Dampfauslass (108), (208) abgeführt wird.

13. Verfahren zur Destillation von Gemischen, unter Verwendung einer Vorrichtung (100), (200) nach einem der Ansprüche 1-12, wobei das Erwärmen mindestens eines Teils der Flüssigfraktion des zu destillierenden Gemisches derart, dass mindestens ein Teil der genannten Flüssigfraktion verdampft, über eine wärmeaustauschende Wechselwirkung zwischen der genannten Flüssigfraktion und mindestens einem geschlossenen Fluidkreislauf (110), (210) realisiert wird, und wobei beim Kühlen mindestens ein Teil der Dampffraktion des genannten Gemisches derart gekühlt wird, dass mindestens ein Teil der genannten Dampffraktion über eine wärmeaustauschende Wechselwirkung zwischen den genannten Dampffraktionen und dem genannten geschlossenen Fluidkreislauf (110), (210) kondensiert wird.

## Revendications

1. Dispositif (100), (200) de distillation de mélanges, comprenant :
- au moins une entrée (102), (202) pour introduire un mélange à distiller dans le dispositif (100), (200),
- au moins un boîtier (101), (201) comprenant :
∘ une section de rebouillage (103), (203) dans laquelle de la chaleur est fournie à au moins une partie de la fraction liquide du mélange à distiller de telle sorte qu'au moins une partie de ladite fraction liquide se vaporise,
∘ au moins une section de condensation (104), (204) dans laquelle au moins une partie de la fraction vapeur du mélange est refroidie de telle sorte qu'au moins une partie de ladite fraction vapeur est condensée, et
∘ au moins une section de séparation (105), (205) qui est au moins partiellement enfermée entre la section de rebouillage (103), (203) et la section de condensation (104), (204), et dans laquelle la section de séparation (105), (205) est en communication fluidique à la fois avec la section de rebouillage (103), (203) et avec la section de condensation (104), (204), dans laquelle la section de séparation (105), (205) est configurée pour assurer un contact vapeur/liquide entre au moins une partie de la fraction vapeur et une partie de la fraction liquide du mélange à distiller,
- au moins une sortie de vapeur (108), (208) et/ou au moins une sortie de liquide (109), (209),
et
- au moins un circuit de fluide fermé (110), (210) qui est configuré pour assurer une interaction d'échange de chaleur avec au moins une fraction du mélange à distiller à l'intérieur de la section de rebouillage (103), (203) et à l'intérieur de la section de condensation (104), (204), et dans lequel le circuit de fluide fermé (110), (210) est configuré de telle sorte que le fluide du circuit de fluide fermé (110), (210) s'écoule dans un seul sens dans la section de rebouillage (103), (203) et/ou dans la section de condensation (104), (204), dans lequel le sens d'écoulement dans la section de rebouillage (103), (203) est opposé au sens d'écoulement dans la section de condensation (104), (204), dans lequel la longueur du boîtier (101), (201) est supérieure à la hauteur et à la largeur dudit boîtier (101), (201), dans lequel le boîtier est orienté sensiblement horizontalement.

2. Dispositif (100), (200) selon la revendication 1, dans lequel la section de rebouillage (103), (203) comprend au moins une région de fond (103b), (203b) configurée pour recevoir et/ou contenir une fraction liquide et au moins une région supérieure (103a), (203a) configurée pour recevoir et/ou contenir une fraction vapeur.

3. Dispositif (200) selon la revendication 1 ou la revendication 2, comprenant plusieurs entrées (202), dans lequel chaque entrée (202) est configurée pour introduire un mélange à distiller dans le dispositif (200), de préférence dans lequel au moins une entrée (202) est située dans la région de fond (203b) de la section de rebouillage (203) afin d'introduire un mélange dans la fraction liquide et/ou dans lequel au moins une entrée (202) est située dans la région supérieure (203a) de la section de rebouillage (203) afin d'introduire un mélange dans la fraction vapeur.

4. Dispositif (100), (200) selon l'une quelconque des revendications précédentes, dans lequel le dispositif (100), (200) présente une configuration longitudinale.

5. Dispositif (100), (200) selon l'une quelconque des revendications précédentes, dans lequel la longueur du boîtier (101), (201) est au moins égale à deux fois la hauteur du boîtier (101), (201).

6. Dispositif (100), (200) selon l'une quelconque des revendications précédentes, comprenant au moins une pompe (111), (211) pour contrôler l'écoulement de fluide dans au moins un circuit de fluide fermé (110), (210).

7. Dispositif (100), (200) selon l'une quelconque des revendications précédentes, dans lequel au moins une partie du circuit de fluide fermé (110), (210) est positionnée à l'intérieur du boîtier (101), (201) et/ou dans lequel au moins une partie du circuit de fluide fermé (110), (210) s'étend sur toute la longueur de la section de rebouillage (103), (203) et/ou dans lequel au moins une partie du circuit de fluide fermé (110), (210) s'étend sur toute la longueur de la section de condensation (104), (204).

8. Dispositif (200) selon l'une quelconque des revendications précédentes, dans lequel au moins un circuit de fluide fermé (210) comprend une pluralité de conduits (210a) reliés entre eux, de préférence dans lequel au moins deux conduits (210a) sont positionnés sensiblement parallèlement.

9. Dispositif (100), (200) selon l'une quelconque des revendications précédentes, dans lequel au moins un circuit de fluide fermé (110), (210) comprend au moins un conduit de dérivation (121), (221) configuré pour dériver au moins une partie du fluide dans le circuit de fluide fermé (110), (210).

10. Dispositif (100), (200) selon l'une quelconque des revendications précédentes, comprenant au moins un refroidisseur (113), (213) configuré pour refroidir le circuit de fluide fermé (110), (210), en particulier le fluide du circuit de fluide fermé (110), (210) et/ou au moins un réchauffeur (114), (214) configuré pour chauffer le circuit de fluide fermé (110), (210), en particulier le fluide du circuit de fluide fermé (110), (210).

11. Dispositif (100), (200) selon l'une quelconque des revendications précédentes, comprenant au moins un réchauffeur secondaire (115), (215) configuré pour chauffer au moins une partie de la fraction liquide dans la section de rebouillage (103), (203).

12. Dispositif (100), (200) selon l'une quelconque des revendications précédentes, comprenant au moins un condenseur externe (116), (216) configuré pour condenser au moins une partie de la fraction vapeur qui est évacuée par au moins une sortie de vapeur (108), (208).

13. Procédé de distillation de mélanges, au moyen d'un dispositif (100), (200) selon l'une quelconque des revendications 1-12, dans lequel le chauffage d'au moins une partie de la fraction liquide du mélange à distiller de telle sorte qu'au moins une partie de ladite fraction liquide se vaporise est réalisé par interaction d'échange de chaleur entre ladite fraction liquide et au moins un circuit de fluide fermé (110), (210), et dans lequel, lors du refroidissement, au moins une partie de la fraction vapeur dudit mélange est refroidie de telle sorte qu'au moins une partie de ladite fraction vapeur est condensée par interaction d'échange de chaleur entre lesdites fractions vapeur et ledit circuit de fluide fermé (110), (210).
